# FASCICULE DE BREVET EUROPEEN

(11) **EP 0 667 613 B1**
(45) Date de publication et mention de la délivrance du brevet: **07.04.1999**
(21) Numéro de dépôt: 95870009.8
(22) Date de dépôt: 08.02.1995
(51) Int. Cl.: G11B 15/44

(54) **Dispositif de commande pour appareils d'enregistrement et/ou de lecture**
Steuerverfahren für Aufnahme und/oder Lesegerät
Control device for recording and/or reading apparatus

(30) Priorité: 09.02.1994 BE 9400149
(43) Date de publication de la demande: 16.08.1995
(73) Titulaire: STAAR SOCIETE ANONYME, B-1200 Bruxelles (BE)
(72) Inventeur: d'Alayer de Costemore d'Arc, Stéphane Marie André, B-1474 Ways (BE)
(74) Mandataire: Overath, Philippe

(56) Documents cités:
- EP-A- 0 366 191
- BO-A- 891 045
- FR-A- 2 538 151
- JP-A- 5 002 800
- JP-A- 5 182 300
- US-A- 3 554 465
- US-A- 4 446 496
- US-A- 4 479 155
- US-A- 5 105 320

## Description

La présente invention se rapporte aux appareils d'enregistrement et/ou de lecture de supports tels cassettes, cartouches de bande magnétique ou de disque, disques à lecture optique et/ou magnéto-optique, etc... et concerne plus particulièrement leurs dispositifs de commande.

Si ces dernières années de tels appareils possédaient un moyen d'entraînement particulier pour chacun de leurs mécanismes principaux à savoir chargement/ éjection du support, entraînement de ce dernier à différentes vitesses et dans des directions opposées, lecture et/ou enregistrement des informations à sa surface, on assiste actuellement, pour des raisons de coûts et d'encombrement, à une réduction de ces moyens d'entraînement, notamment en leur adjoignant des dispositifs de sélection tels des solénoïdes, des embrayages mécaniques, etc... afin qu'un même dispositif d'entraînement puisse être utilisé pour commander deux mécanismes distincts.

Le brevet américain US-A-5,058,095 décrit un dispositif d'entraînement pour tourne-disques assurant également le chargement du disque sur son plateau d'entraînement ou son éjection. Comme on le constate, la sélection du mécanisme entraîné par le moteur est assurée par un embrayage mécanique actionné par un moyen tel qu'un solénoïde ou un relais.

Le brevet américain US-A-5,136,442 concerne un dispositif similaire à celui décrit ci-dessus mais appliqué à un appareil à bande magnétique contenue dans une cassette.

Le brevet américain US-A-5,043,832 se rapporte également à un dispositif assurant le chargement d'une cassette de bande magnétique, puis le chargement de la bande magnétique autour des moyens de lecture et/ou d'enregistrement. Les moyens ici décrits sont constitués d'un seul axe sur lequel une vis sans fin peut se déplacer et par rapport auquel cette même vis sans fin peut être entraînée en rotation pour servir d'embrayage.

La demande EP-A-0 366 191 décrit un dispositif comprenant une double coulisse dont l'une est muni d'une crémaillère entraînée par un moteur pour assurer le chargement/déchargement d'une cassette et la mise en position opérative des têtes de lecture ainsi que le débrayage/embrayage des bobines ou de la crémaillère. Un électro-aimant à double pôle est prévu pour maintenir la position de lecture et celles de défilement à vitesse rapide. Un circuit logique est prévu pour inverser le sens de rotation dudit moteur et pour modifier sa tension d'alimentation. La mise en oeuvre de ces trois éléments ne permet le passage d'une fonction à une autre qu'après l'accomplissement de phases intermédiaires ce qui rend l'appareil peu souple et accroît sensiblement sa consommation électrique. Ainsi, ce dispositif ne permet pas le passage entre tous les modes de fonctionnement de l'appareil par le seul déplacement d'un élément de commande. EP-A-0 366 191 divulgue les caractéristiques du préambule de la revendication 1.

JP-A-5 182 300 décrit un appareil d'enregistrement et de lecture comprenant un élément de commande réversible, ayant la forme d'une plaque (5), agissant sur un dispositif d'entrainement d'une bande magnétique et sur un dispositif d'inversion du sens de défilement de la bande. Par contre, cet élément de commande n'agit pas sur un dispositif de chargement de la bande et, de part sa structure même, ne pourrait pas facilement être adapté pour le faire.

US-A-5 105 320, US-A-4 479 155 et JP-A-5 002 800 décrivent chacun un appareil d'enregistrement et de lecture dans lequel un élément de commande réversible agit sur des dispositifs de chargement et d'entrainement du support magnétique. L'élément de commande n'agit pas sur un dispositif d'inversion du sens de défilement du support.

Cependant, ces dispositifs nécessitent l'emploi d'éléments d'embrayage/débrayage pour activer les mécanismes qu'ils doivent entraîner et d'autre part, ils ne permettent pas toujours toute la souplesse d'utilisation procurée par des moyens d'entraînement indépendants. Notamment ils n'assurent pas toutes les différentes fonctions de l'appareil (p. ex. reproduction, enregistrement, défilement rapide,...) et en outre, le passage d'une fonction à une autre ne peut avoir lieu qu'après l'accomplissement d'une séquence particulière.

Il convient donc d'adjoindre aux mécanismes proposés dans ces brevets, soit un autre mécanisme d'entraînement indépendant, soit des moyens électromécaniques tels des solénoïdes pour assurer ces différentes fonctions (arrêt, lecture, pause, avance et/ou recul rapides, inversion du sens de défilement, etc...) ou certaines d'entre elles, avec pour résultat d'augmenter sensiblement de nombre de composants de l'appareil et donc leur complexité.

Or, la simplification des appareils pour faciliter leur montage et obtenir un prix de revient le moins élevé possible est un critère de plus en plus important.

Un premier but de la présente invention est donc de répondre à ces attentes en prévoyant des moyens faciles à mettre en oeuvre et économiques permettant d'utiliser un seul moyen de commande pour assurer toutes les fonctions de l'appareil d'enregistrement et/ou de lecture.

Un second but de l'invention est de proposer des moyens excessivement simples.

Un troisième but de l'invention est de proposer des moyens assurant par commande à distance, c'est-à-dire sans mouvement mécanique important et/ou liaison mécanique directe à partir des boutons de commande, les différents modes de fonctionnement d'un appareil d'enregistrement et/ou de lecture.

Un quatrième but de l'invention est de proposer des moyens auto-actionnables, c'est-à-dire ne nécessitant pas d'interventions extérieures autres que simplement la sélection de la fonction désirée par l'utilisateur.

Un autre but de l'invention est de proposer des moyens de commande assurant à tout moment le passage direct d'une quelconque fonction à une toute autre fonction, c'est-à-dire sans l'intervention d'éléments auxiliaires pour l'accomplissement d'une séquence ou d'une étape intermédiaire avant de pouvoir assurer l'autre fonction.

En vue de la réalisation de ces différents buts, un appareil selon la présente invention est défini à la revendication 1.

D'autres avantages et particularités de l'invention ressortiront de la description détaillée, donnée ci-après, d'un mode de réalisation préféré auquel des modifications peuvent être apportées sans pour autant sortir du cadre de l'invention et dans laquelle :
- la figure 1 représente une vue de dessus d'un appareil pour cassette de bande magnétique, après insertion de celle-ci dans le logement du dispositif de chargement,
- la figure 2 est une vue de face de l'appareil tel que représenté à la figure 1,
- la figure 3 est une vue latérale de l'appareil tel que représenté à la figure 1,
- la figure 4 est semblable à la figure 1, la cassette de bande magnétique ayant été placée en position opérative par le dispositif de chargement,
- la figure 5 est semblable aux figures 1 et 4, l'appareil étant en position de reproduction,
- la figure 6 est semblable aux figures 1, 4 et 5, l'appareil étant en position de lecture mais la bande défilant dans le sens opposé à celui de la figure 5,
- la figure 7 est une vue en plan partielle d'un élément de l'appareil,
- la figure 8 est une vue partielle en perspective de l'élément de commande vu de dessous.

Dans un but de simplification des figures et pour faciliter la compréhension du fonctionnement du dispositif objet de l'invention, on n'a représenté sur les figures que les éléments essentiels.

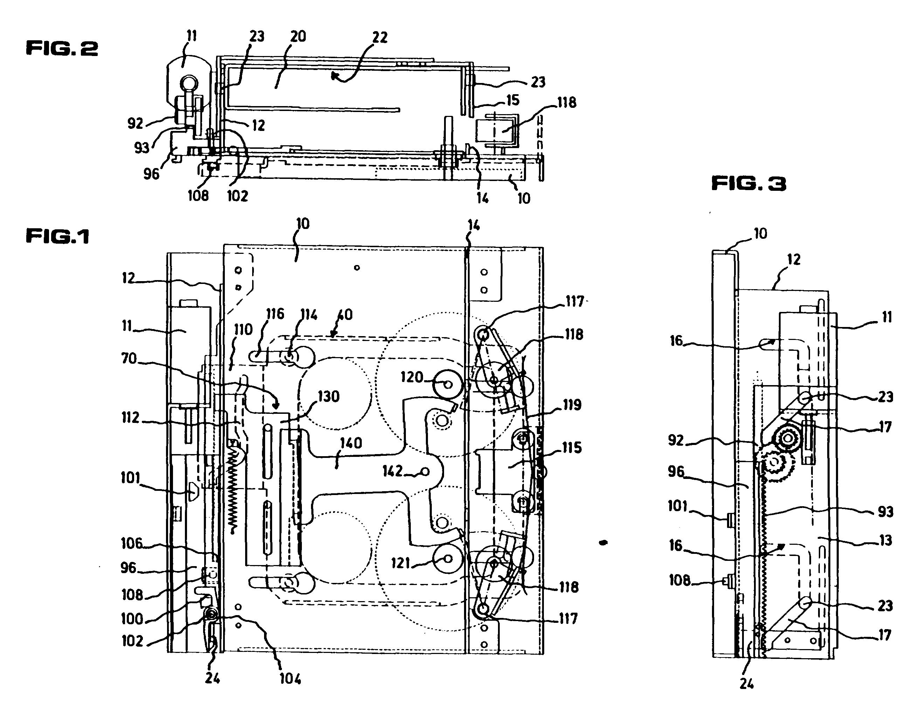

Comme le montrent les figures 1 à 6, l'appareil ici représenté est un lecteur/enregistreur de bande magnétique contenue dans une cassette et il a la particularité de pouvoir recevoir tant des cassettes analogues du type "cassettes compactes" que des cassettes numériques du type "DCC". Il comprend notamment un châssis 10, muni de parois verticales 12, 14 guidant le dispositif 22 de chargement d'une cassette en position opérative respectivement son déchargement en position d'éjection, un dispositif 40 de mise en position de lecture et d'entraînement de la bande magnétique, son transport à vitesse rapide, sa mise à l'arrêt temporaire,... ainsi qu'un dispositif 70 assurant l'inversion du sens de défilement de la bande magnétique.

Latéralement, ce châssis 10 est recourbé et supporte un moteur 11 commandant la translation d'un élément de commande 96 par l'intermédiaire d'un train d'engrenages 92 et d'une crémaillère 93 fixée audit élément de commande.

Cet élément de commande 96 est dimensionné et positionné de telle sorte qu'au cours de son mouvement de va-et-vient de translation, il coopère ou non avec chacun des trois dispositifs précités, à savoir le dispositif de chargement 22, le dispositif 40 assurant les différentes fonctions de l'appareil (lecture, pause, défilement rapide, etc...) ainsi que le dispositif 70 assurant l'inversion du sens de défilement de la bande magnétique.

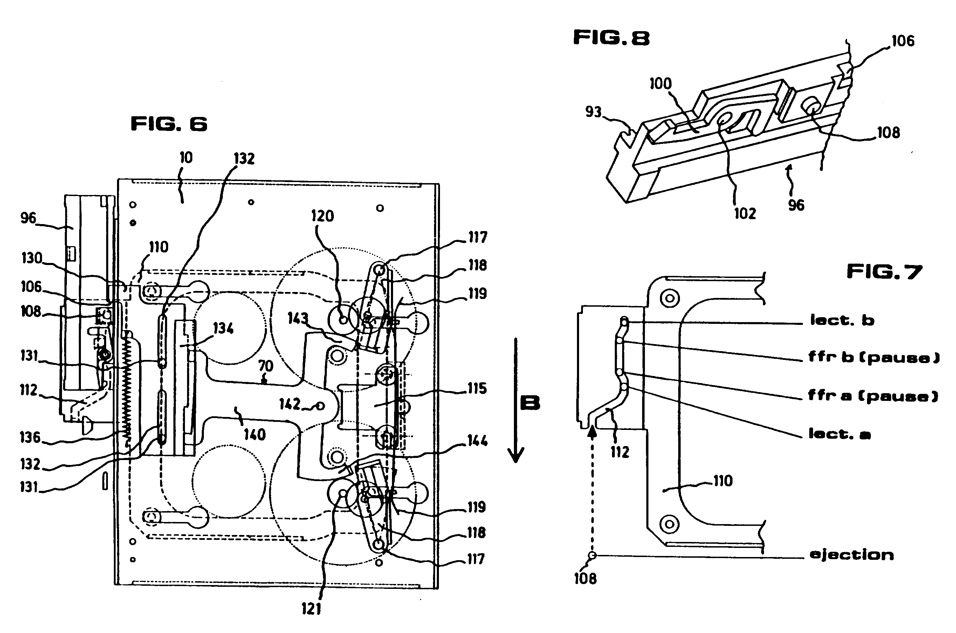

Pour assurer ces coopérations, l'élément de commande 96 porte un cliquet 100, une patte 106 et un téton 108 (voir figure 8).

Le cliquet 100 est monté en rotation sur un axe 102 et soumis à l'influence d'un ressort en épingle 104 le forçant à pivoter dans le sens anti-horlogique (vue de dessus de la figure 1).

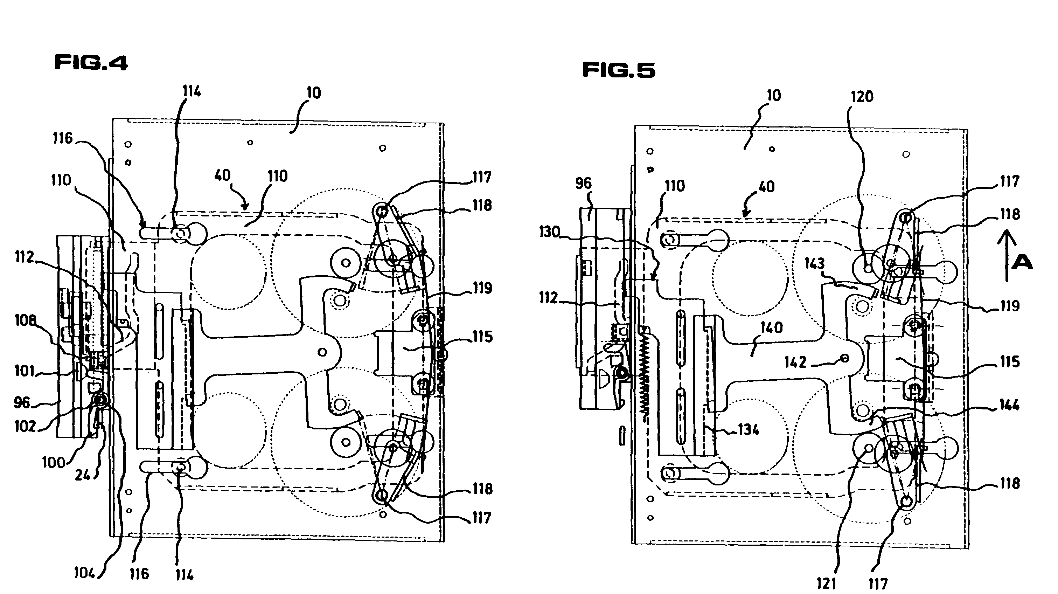

Comme montré à la figure 1, ce cliquet 100 solidarise une patte 24 du dispositif de chargement 22 au mouvement de l'élément de commande 96. Par conséquent, lorsque le moteur 11 est mis sous tension et déplace par translation l'élément de commande 96 de la position représentée à la figure 1 vers celle représentée à la figure 4, il entraîne dans cette même translation le dispositif de chargement 22 de la cassette.

Le dispositif de chargement 22 comprend principalement un logement 20 dans lequel est positionnée la cassette, ledit logement portant des tétons 23 passant au travers de fentes 16 en "L inversé" pratiquées dans les parois verticales fixes (12, 14) et de fentes inclinées 17 pratiquées dans des plaques latérales mobiles 13, 15 s'appuyant sur lesdites parois verticales 12, 14. La patte 24 fait partie de la paroi latérale mobile 13.

Pour de plus amples explications sur ce dispositif de chargement, on se reportera avantageusement au brevet français n° 82 19106 de la demanderesse.

Le déplacement de la patte 24 assure celui des parois 13, 15 qui sont liées rigidement et la coopération des fentes 16, 17 assure le déplacement du dispositif de chargement 22 et donc du logement 20 dans un plan horizontal puis vertical.

Ainsi le logement 20 amène la cassette y insérée de sa position d'insertion ou d'éjection (figure 1) vers sa position opérative (figure 4) et vice-versa lorsque le sens de rotation du moteur est inversé, par exemple en inversant la polarité de son alimentation.

Lorsque l'élément de commande 96 approche de la position représentée à la figure 4, un épaulement 101 porté par le châssis fixe 10 assure le basculement du cliquet 100 autour de son axe 102 à l'encontre du ressort en épingle 104. Comme représenté à la figure 4, la patte 24 est alors libérée et le dispositif de chargement maintenu en cette position par des moyens élastiques non représentés ; la cassette étant alors en position opérative.

En poursuivant sa translation, l'élément de commande 96 vient agir sur le dispositif 40 en amenant le téton 108 dans la gorge 112 pratiquée dans la plaque 110 (figure 7). Ainsi qu'il est montré sur les figures 4 à 7, l'entrée de la gorge 112 est évasée de façon à assurer qu'en toute circonstance le téton 108 pénètre avec certitude dans ladite gorge. La plaque 110 est montée en translation sur le châssis 10 par l'intermédiaire des tétons 114 qu'elle porte et de fentes 116 pratiquées dans le châssis 10, son déplacement étant perpendiculaire à celui de l'élément de commande 96. Comme représenté, des roulettes de pression 118 sont montées sur des axes 117 fixés au châssis 10 et subissent l'influence de moyens élastiques 119.

La plaque 110 porte les éléments de lecture et d'enregistrement 115 et assure le pivotement des roulettes de pression 118 autour de leur axe 117 afin de presser la bande magnétique contre un des cabestans 120, 121 pour assurer le défilement de la bande magnétique à vitesse de lecture ou d'enregistrement (figures 5, 6).

Le profil de la gorge 112 assure le déplacement de la plaque 110 et donc la mise en position lecture de la bande; son défilement à vitesse rapide par léger écartement de la roulette de pression 118 du cabestan 120, 121 approprié et recul des éléments de lecture et/ou d'enregistrement 115 (ffr a - ffr b, figure 7); l'arrêt temporaire de la bande par dégagement des deux roulettes de pression (pause, figure 7) comme représenté respectivement aux figures 4, 5, 6 et 7.

Comme on le constate, ces différents modes de fonctionnement sont simplement obtenus par déplacement de l'élément de commande 96 et donc de son téton 108 dans la gorge 112 de la plaque 110 (figure 7), le moteur 11 étant contrôlé par des interrupteurs ou des boutons de commande de façon à tourner dans un sens ou l'autre, par exemple en voyant la polarité de son alimentation inversée de façon à déplacer dans un sens ou l'autre la crémaillère 96 selon le cheminement et les différentes positions représentées à la figure 7. Un avantage important de cette conception réside dans le fait que la position de la crémaillère peut être modifiée à tout instant tant dans une direction que celle opposée, et ce, en fonction des commandes imposées par l'utilisateur. En d'autres mots, la crémaillère est réversible à tout instant et dans n'importe quelle position qu'elle occupe, par exemple la cassette peut être éjectée à tout moment, une autre fonction peut être sélectionnée à tout instant ce qui donne la sensation à l'utilisateur que chaque fonction a sa propre source d'entraînement car l'appareil répond instantanément à toute nouvelle commande alors que seul le moteur 11 procure l'énergie nécessaire.

En poursuivant son déplacement entre les positions ffr a et ffr b (figure 7), l'élément de commande 96 actionne le dispositif d'inversion 70. En effet, la patte 106 qu'il porte vient agir sur une coulisse 130 monté en translation sur le châssis 10 par l'intermédiaire des tétons 131 portés par ledit châssis et de fentes 132 pratiquées dans ladite coulisse (figure 6).

Sur son flanc opposé, ladite coulisse 130 comprend un profil 134 coopérant avec une bascule 140 montée en pivotement autour d'un axe 142 porté par le châssis. Cette bascule 140 comporte deux pattes 143, 144 coopérant chacune avec un roulette de pression 118 afin de simultanément écarter l'une d'entre elles du cabestan adjacent 121 (figure 5) et laisser l'autre appliquer la bande contre le cabestan adjacent 120 (figure 5) assurant ainsi le défilement de la bande dans un sens (sens A, figure 5 ; lect. a, figure 7).

Le pivotement de la bascule assure le défilement de la bande dans le sens opposé (B, figure 6 ; lect.b, figure 7). Comme on le remarque à la figure 6, ce pivotement de la bascule est assuré lorsque la patte 106 déplace la coulisse 130 à l'encontre de moyens élastiques 136 qui la ramènent dans la position stable représentée aux figures 4 et 5. Il convient de remarquer que le pivotement de cette bascule 140 a lieu de préférence entre les positions ffr a et ffr b (figure 7) c'est-à-dire lorsque les deux roulettes de pression 118 et les éléments de lecture et/ou d'enregistrement 115 sont légèrement reculés et donc l'influence des moyens élastiques 119 plus faible de façon à ce que l'effort à produire soit réduit au minimum. En poursuivant son mouvement dans la gorge 112, le téton 108 commande le déplacement de la plaque 110 pour assurer toutes les fonctions de l'appareil dans l'autre sens de défilement (B) de la bande (figure 7).

Lorsque le moteur 11 est commuté pour tourner dans le sens opposé, l'élément de commande 96 est alors déplacé de la position de fin de course qu'il peut éventuellement occuper (lect. b, figure 7), vers son autre position de fin de course représentée à la figure 1. Au cours de ce mouvement, tout d'abord la patte 106 quitte la coulisse 130, l'appareil est alors ramené dans son sens de défilement dit "préférentiel" (figure 5), puis la plaque 110 est ramenée en position inopérative dans laquelle la bande magnétique et la cassette sont libérées de tout engagement avec les éléments de lecture et/ou d'enregistrement 115 (tête magnétique, d'effacement,...) ainsi qu'avec les éléments de transport (roulettes de pression 118, cabestans 120, 121,...) comme montré à la figure 4. Le téton 108 quitte alors la gorge 112 et les moyens élastiques 119 maintiennent la plaque 110 dans la position représentée à la figure 4.

Simultanément, le cliquet 100 est réactivé et vient à nouveau emprisonner la patte 24. Si le moteur 11 est maintenu sous tension, l'élément de commande 96 poursuit sa translation et assure alors l'actionnement du dispositif de déchargement 22 de la cassette en ramenant le logement 20 dans la position représentée à la figure 1. La cassette se trouve alors en position inopérative ou d'éjection et peut être saisie par l'utilisateur.

Comme on le comprend un seul moteur, en l'occurrence le moteur 11 et un seul élément en l'occurrence l'élément de commande 96, suffisent pour actionner tous les mécanismes de l'appareil et assurer son fonctionnement complet. De plus, les touches de commande peuvent être situées à tout endroit voulu puisque la seule source d'énergie nécessaire est le moteur 11.

En outre, un des éléments d'entraînement de la bande ou du support tels les roulettes de pression 118, les éléments de lecture et/ou d'enregistrement 115 peuvent être dimensionnés de telle sorte à venir s'engager avec un élément du dispositif de chargement 22 de telle sorte à verrouiller celui-ci en position opérative et donc éviter l'emploi de moyens élastiques pour l'y maintenir.

Le positionnement de la crémaillère aux différents endroits assurant les fonctions de l'appareil est assuré par exemple à l'aide d'interrupteurs mécaniques ou optiques disposés sur le parcours de la crémaillère ou par un dispositif comptant les tours de rotation d'un des axes ou des engrenages.

## Revendications

1. Appareil d'enregistrement et/ou de lecture d'informations portées par un support d'informations, comportant:
- un dispositif de chargement (22) assurant la mise en position opérative, respectivement inopérative du support,
- un dispositif (40) assurant à ladite position opérative l'entraînement du support et la lecture/l'enregistrement d'informations à sa surface par l'intermédiaire d'éléments (115, 118, 119; 120, 121) montés sur un châssis fixe (10) respectivement un châssis mobile (110),
- un dispositif d'inversion du sens de défilement (70) du support,
- un moyen d'entraînement (11),
- un élément de commande réversible (96) associé au moyen d'entraînement (11) et portant des moyens (100) pour agir sur le dispositif de chargement (22),
caractérisé en ce que
l'élément de commande réversible (96) est déplacé uniquement par le moyen d'entraînement (11) selon un parcours aller-retour pour successivement et sélectivement agir mécaniquement sur les dispositifs de chargement (22), d'entraînement (40) et d'inversion (70) de façon à assurer par son seul déplacement le passage entre tous les modes de fonctionnement de l'appareil.

2. Appareil selon la revendication 1, caractérisé en ce que l'élément de commande (96) est uniquement entraîné par un moteur électrique (11) à sens de rotation réversible.

3. Appareil selon la revendication 1, caractérisé en ce que la coopération entre l'élément de commande (96) et le châssis mobile (110) est constituée d'un téton (108) parcourant une gorge (112).

4. Appareil selon la revendication 3, caractérisé en ce que le téton (108) est porté par l'élément de commande (96) et la gorge (112) par le châssis mobile (110).

5. Appareil selon la revendication 1, caractérisé en ce que l'élément de commande (96) porte une patte (106) coopérant avec une coulisse (130) reliée à une bascule (140) du dispositif d'inversion (70) du sens de défilement du support.

6. Appareil selon la revendication 5, caractérisé en ce que le dispositif d'inversion du sens de défilement (70) est actionné lorsque le châssis mobile (110) occupe une position intermédiaire par rapport au châssis fixe (10) où les éléments de lecture (115) d'entraînement (118, 120) et des moyens élastiques (119) sont sensiblement dégagés du support pour limiter l'effort à appliquer.

7. Appareil selon l'une quelconque des revendications précédentes, caractérisé en ce que le moyen d'entraînement (11) est réversible à tout moment et pour toute position de l'élément de commande (96).

8. Appareil selon l'une quelconque des revendications précédentes, caractérisé en ce que l'élément de commande (96) est directement déplaçable, à tout moment, d'une position quelconque vers une autre position quelconque suite au seul actionnement du moyen d'entraînement (11).

## Patentansprüche

1. Gerät zum Aufnehmen und/oder Lesen von auf einem Informationsträger getragenen Informationen, umfassend:
- eine Ladevorrichtung (22), die das Anordnen des Trägers in der Betriebsstellung bzw. der Nicht-Betriebsstellung gewährleistet,
- eine Vorrichtung (40), die in der Betriebsstellung den Antrieb des Trägers und das Lesen/Aufnehmen von Informationen an seiner Oberfläche mit Hilfe von Elementen (115, 118, 119, 120, 121) gewährleistet, die an einem festen Rahmen (10) bzw. einem beweglichen Rahmen (110) befestigt sind,
- eine Umkehrlaufvorrichtung (70) des Trägers,
- ein Antriebsmittel (11),
- ein umkehrbares Steuerungselement (96), das dem Antriebsmittel (11) zugeordnet ist und Mittel (100) zum Einwirken auf die Ladevorrichtung (22) aufweist,
**dadurch gekennzeichnet,** daß das umkehrbare Steuerungselement (96) ausschließlich durch das Antriebsmittel (11) entlang eines Hin- und Rückwegs verlagert wird, um nacheinander und wahlweise mechanisch auf die Ladevorrichtung (22), die Antriebsvorrichtung (40) und die Umkehrlaufvorrichtung (70) einzuwirken, um durch seine ausschließliche Umstellung den Übergang zwischen allen Funktionsarten des Geräts zu gewährleisten.

2. Gerät nach Anspruch 1, **dadurch gekennzeichnet,** daß das Steuerungselement (96) ausschließlich durch einen Elektromotor (11) mit umkehrbarem Drehsinn angetrieben ist.

3. Gerät nach Anspruch 1, **dadurch gekennzeichnet,** daß das Zusammenwirken zwischen dem Steuerungselement (96) und dem beweglichen Rahmen (110) durch einen eine Rille (112) durchlaufenden Zapfen (108) gebildet ist.

4. Gerät nach Anspruch 3, **dadurch gekennzeichnet,** daß der Zapfen (108) von dem Steuerungselement (96) und die Rille (112) von dem beweglichen Rahmen (110) getragen ist.

5. Gerät nach Anspruch 1, **dadurch gekennzeichnet,** daß das Steuerungselement (96) eine Klaue (106) aufweist, die mit einem Schieber (130) zusammenwirkt, welcher mit einer Kippvorrichtung (140) der Umkehrlaufvorrichtung (70) des Trägers verbunden ist.

6. Gerät nach Anspruch 5, **dadurch gekennzeichnet**, daß die Umkehrlaufvorrichtung (70) betätigt wird, wenn der bewegliche Rahmen (110) eine Zwischenstellung bezüglich des festen Rahmens (10) einnimmt, in der die Leseelemente (115), die Mitnahmeelemente (118, 120) und elastische Mittel (119) im wesentlichen außer Eingriff mit dem Träger sind, um die aufzuwendende Anstrengung zu begrenzen.

7. Gerät nach einem der vorhergehenden Ansprüche, **dadurch gekennzeichnet,** daß das Antriebsmittel (11) jederzeit und bei jeder Stellung des Steuerungselements (96) umkehrbar ist.

8. Gerät nach einem der vorhergehenden Ansprüche, **dadurch gekennzeichnet,** daß das Steuerungselement (96) jederzeit direkt in Folge der ausschließlichen Betätigung des Antriebsmittels (11) von einer beliebigen Stellung in eine andere beliebige Stellung verlagerbar ist.

## Claims

1. Apparatus for the recording and/or playback of information on an information support, comprising:
- a loading device (22) ensuring the setting of the information support in operative, respectively inoperative position,
- a device (40) ensuring in said operative position the driving of the support and the playback/recording of information on its surface through elements (115, 118, 119; 120, 121) mounted on a fixed frame (10) respectively a movable frame (110),
- a support travelling direction reversal device (70),
- power means (11),
- a reversible control element (96) associated to the power means (11) and bearing means (100) for acting on the loading device (22),
characterized in that
the reversible control element (96) is moved only by the power means (11) along a forward and return stroke to successively and selectively act mechanically on the loading device (22), the driving device (40) and the reversal device (70) to ensure by its sole movement the shifting of the apparatus through all its operating modes.

2. Apparatus according to claim 1, characterized in that the control element (96) is powered only by an electric motor (11) with reversible rotational direction.

3. Apparatus according to claim 1, characterized in that the cooperation between the control element (96) and the movable frame (110) is made up a stud (108) travelling in a groove (112).

4. Apparatus according to claim 3, characterized in that the stud (108) is carried by the control element (96) and the groove (112) by the movable frame (110).

5. Apparatus according to claim 1, characterized in that the control element (96) carries a leg (106) cooperating with a slider (130) connected to a balanced lever (140) of the support travelling direction reversal device (70).

6. Apparatus according to claim 5, characterized in that the support travelling direction reversal device (70) is powered when the movable frame (110) is in an intermediary position with respect to the fixed frame (10) in which the playback elements (115), the driving elements (118, 120) and resilient means (119) are notably disengaged from the support to lower the torque to be applied.

7. Apparatus according to anyone of the preceding claims, characterized in that the power means (11) is reversible at any time and in any position of the control element (96).

8. Apparatus according to anyone of the preceding claims, characterized in that the control element (96) is directly movable, at any time, from any position towards any other position responsive to the sole actuation of the power means (11).
